# EUROPEAN PATENT SPECIFICATION

(11) **EP 1 424 489 B1**
(45) Date of publication and mention of the grant of the patent: **21.03.2007**
(21) Application number: 03380235.6
(22) Date of filing: 21.10.2003
(51) Int. Cl.: F02M 31/10, F02B 29/04

(54) **A heat exchanger for vehicles**
Wärmetauscher für Kraftfahrzeuge
Echangeur de chaleur pour véhicules

(30) Priority: 28.11.2002 ES 200202741
(43) Date of publication of application: 02.06.2004
(73) Proprietor: Radiadores Ordonez, S.A., 12006 Castellon (ES)
(72) Inventor: Ordonez Sanchis, Roberto, 12001 Castellon (ES)
(74) Representative: Ungria Lopez, Javier

(56) References cited:
- US-A- 4 930 484
- US-A- 5 655 506
- US-A- 6 102 012
- PATENT ABSTRACTS OF JAPAN vol. 012, no. 152 (M-695), 11 May 1988 (1988-05-11) & JP 62 271928 A (TOYOTA MOTOR CORP), 26 November 1987 (1987-11-26)
- PATENT ABSTRACTS OF JAPAN vol. 1996, no. 02, 29 February 1996 (1996-02-29) & JP 07 286562 A (NIPPONDENSO CO LTD), 31 October 1995 (1995-10-31)

## Description

### OBJECT OF THE INVENTION

The invention consists of a heat exchanger for vehicles, which is used essentially to raise the temperature of the air taken into the engine, above all at specific moments when the technical requirements need to have hotter air.

Another use could be to reduce the temperature of the air coming from the turbocompressor.

These exchangers normally use the coolant itself as the fluid having heat, since the variation or rise of temperature will be carried out in some values no higher than the operating temperature of the engine.

More specifically, this technical need to raise at certain moments the temperature of the inlet air is related to the use of particle filters for the exhaust, above all in turbocharged diesel engines. With this rise of temperature of the inlet air, the combustion temperature needed to regenerate the particle filters rises every so often.

### BACKGROUND OF THE INVENTION

Some heat exchangers for vehicles consist of a hollow body with a cylindrical shape that have some metal materials in their entire structure.

This cylindrical-shaped body is crossed longitudinally by several tubes for the passage of air between which the liquid having heat is made to recirculate.

This type of tube exchanger is characterized in that the air-wall exchange surface is notably identical to the wall-liquid exchange surface, for which reason it is mainly suitable to carry out a heat exchange between fluids of the same nature, for example, between two liquids.

### DESCRIPTION OF THE INVENTION

The heat exchanger for vehicles that constitutes the object of the invention is characterized in that it comprises a molded plastic frame that includes in a single body the air inlet and outlet ducts located in opposite ends. This frame also includes the anchoring supports.

In turn, the frame is characterized in that it has a wide mouth that permits the assembly and coupling of inside elements inside it, such as a radiator body that includes several flat conduits that permit the circulation of a liquid fluid from the inlet to the outlet, both forming part of the radiator body.

Furthermore, this radiator body is characterized in that it includes a multitude of panel type cooling fins, that define longitudinal air passages that favor the circulation of air that enters through the inlet duct and comes out through the outlet duct taking heat from the cooling body assembly that is located inside the frame, at the same time that said cooling body has an essentially metal structure. With this arrangement the air-wall exchange surface increases in such a way that the ratio between this liquid-wall exchange surface is in a proportion higher than 2:1.

In turn, the mouth of this frame is closed by means of a metal cover that is fastened by means of a type of perimetric rivet, after insertion of an elastic seal.

This cover constitutes an element for fastening the radiator body assembly and it is integral thereto.

On the other hand, the bottom of the frame opposite the space occupied by the mouth could optionally constitute that bottom, an independent element, in other words, a second cover that would couple to the frame like the first one.

With this arrangement, we increase the yield of exchange between the air and the liquid element, such as for example water, since these elements have a very different fluid-wall thermal transmittance, for which reason it is convenient to increase the contact surface of the air with the exchange wall in order to compensate its lower thermal transmission coefficient. This is achieved by adding the secondary surface formed by the fins welded to the sheets forming the liquid passages.

The bottom of the frame includes some reinforcement ribs in order to prevent deformation or breakage due to pressure.

In terms of the operating temperature range, the frame could be made out of other materials, for example aluminum, although plastic is the most advisable material, since it is economical with a low thermal transmittance at the same time that it is a good insulator, which prevents heat from leaking outside, which will reduce the heating of air, the main purpose of this exchange of the invention.

With this new exchanger we obtain a notable yield, the air inside the compartment of the frame where the metal structure radiator body assembly is located, heats rapidly.

Likewise, this type of exchanger can be used to cool air coming from the turbocompressor before it enters the engine cylinders.

Hereinafter to provide a better understanding of this specification and forming an integral part thereof, some figures in which the object of the invention has been represented in an illustrative and non-restrictive manner, are accompanied.

### BRIEF DESCRIPTION OF THE DRAWINGS

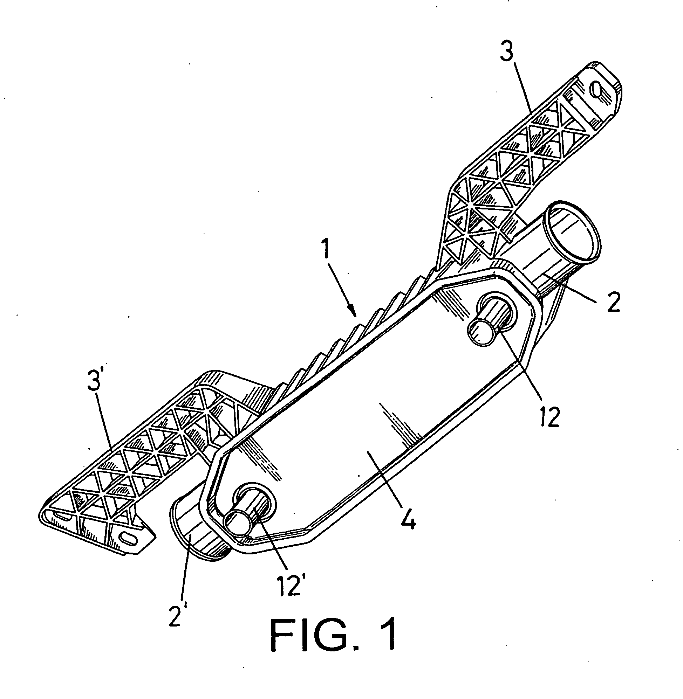

Figure 1 shows a perspective view of a heat exchanger for vehicles that constitutes the object of the invention.

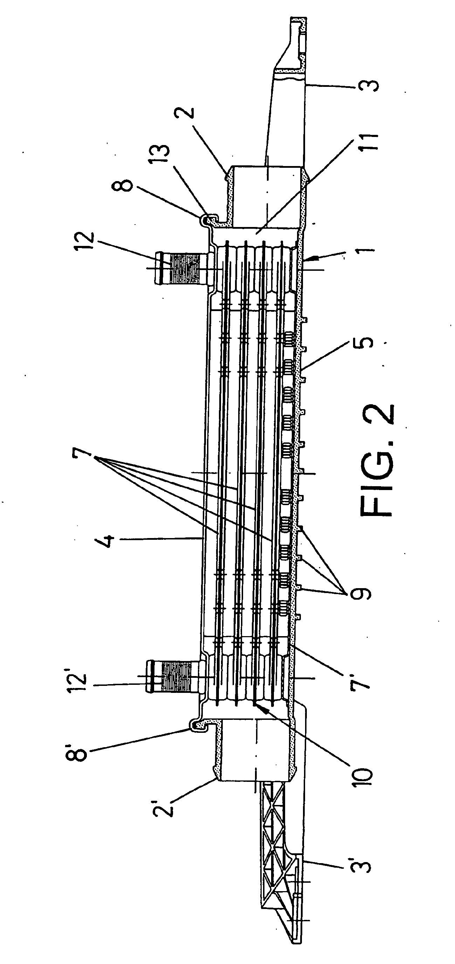

Figure 2 shows a sectioned plan view of the exchanger.

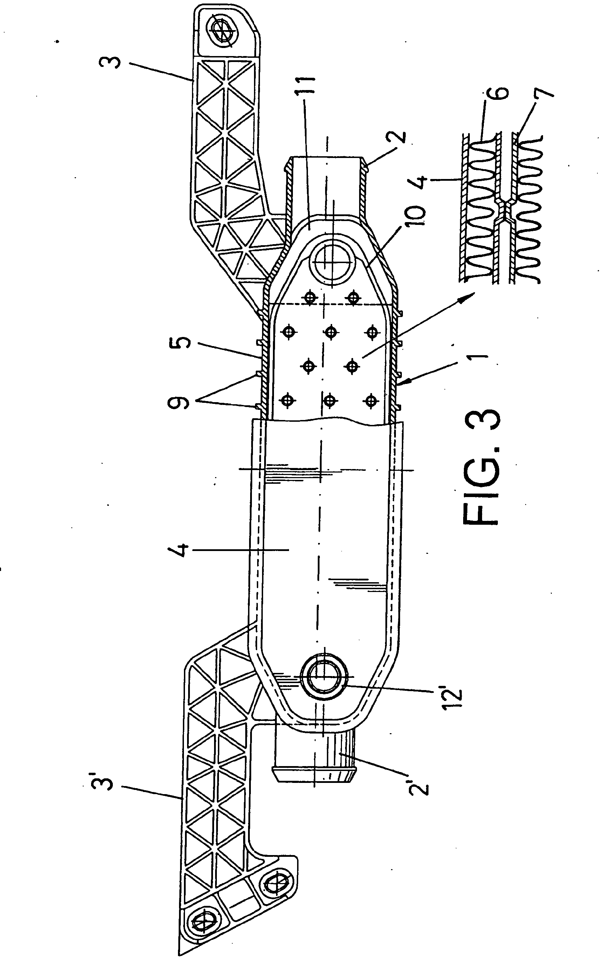

Figure 3 shows a raised view of the exchanger with a partial section.

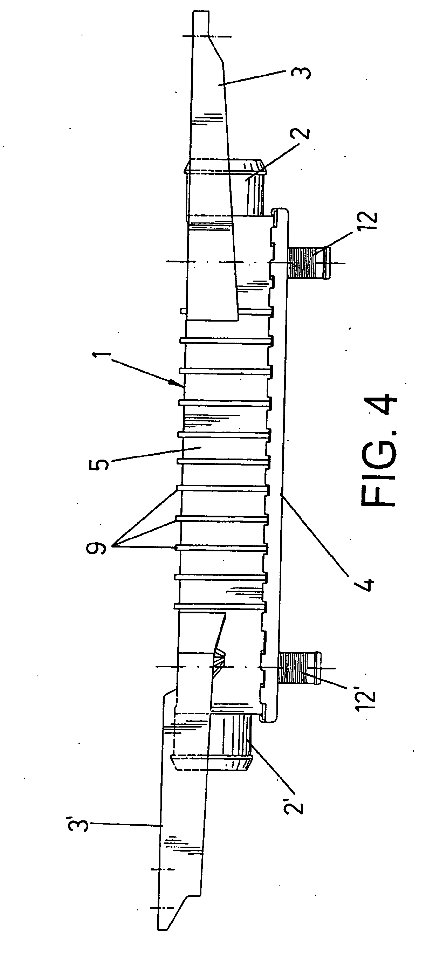

Figure 4 shows a bottom plan view of the exchanger of the invention.

### DESCRIPTION OF THE PREFERRED EMBODIMENT

Hereinafter an embodiment of the invention taking into account the numbering used in the figures, is described.

It comprises a molded plastic frame (1), that has in a single body the air inlet duct and outlet duct (2, 2') and the anchoring supports (3, 3'). Said frame (1) is open at one of its sides by means of a wide mouth for assembly of the inside elements, with the particularity of having the cooling fins (6) constituting the panel crosswise, with the air passages arranged longitudinally in order to favor the circulation of said air fluid that follows the path of these air passages.

Just like in conventional radiators, these fins are arranged between the different sheets (7) constituting flat conduits, where the fluid will circulate.

These fins, together with the sheets (7), constitute a radiator body assembly (10) that is adjusted in the inside chamber (11) of the frame (1). This radiator body (10) also includes an inlet conduit (12) for water or another liquid fluid and another outlet conduit (12') for this liquid fluid. Likewise, the liquid could circulate in the reverse direction if it were convenient for its assembly in the vehicle.

With this arrangement we increase the air-water exchange yield, since they are elements with a different thermal transmittance (frame and radiator body), for which reason, it is convenient to increase the exchange surface.

Another characteristic of the invention is that the sheet (4) functions like a support of the radiator assembly inside the frame and in turn it functions like a cover of the container or frame (1), fastening thereto by means of a type of rivet or fold (8) that clamps a perimetric projection (13) that limits said mouth of the frame, achieving a seal with the frame by insertion of an elastic seal (8').

Although the preferred embodiment only provides for a metal cover (4), it could optionally be made with two covers, in which case the second one would be arranged in replacement of the bottom (5) of the container or frame (1).

With regard to said bottom (5), the existence of some reinforcement ribs (9) in order to prevent its deformation or breakage due to pressure should be pointed out.

In order to better support the pressure of the liquid, it is convenient, but not essential, to have a final sheet (7') which in turns functions as protection for the end fins.

In terms of the operating temperature range, the frame (1) could be made out of other materials, for example, aluminum, although plastic is the most advisable one, since it is economical and has a low thermal transmittance, which will prevent heat from leaking outside, which would reduce the heating of air, the main purpose of this exchanger of the invention.

## Claims

1. A heat exchanger for vehicles, that including an inlet and outlet for the air to be heated, as well as an inlet and outlet for the liquid fluid that transmits its heat to the air in order to raise the temperature thereof **characterized in that** it comprises
- a frame of molded material that includes an ample inside chamber (11) that communicates with the outside through at least one wide side mouth and the two end conduits comprising the air inlet (2) and outlet (2'), this chamber also including some extensions comprising an anchoring support (3, 3');
- an independent metal radiator body (10) that is housed inside the inside chamber (11) through the wide side mouth of the frame (1), said radiator body (10) including the liquid fluid inlet duct (12) and liquid fluid outlet duct (12');
- at least one sealing cover (4) that is fastened hermetically, that functions as a support of the assembly with the insertion of an elastic seal (8') on the perimetric edge of the mouth of said frame (1).

2. A heat exchanger for vehicles, according to claim 1, **characterized in that** the radiator body (10) includes panel type cooling fins (6) established between the sheet-like elements (7, 7') of this type of radiator (10), sheet-like elements that constitute the passages for fluid between the fluid inlet (12) and fluid outlet (12').

3. A heat exchanger for vehicles, according to claim 2, **characterized in that** the cooling fins (6) define air passages in the direction that the air circulates from the inlet (2) to the outlet (2') that form part of the frame (1).

4. A heat exchanger for vehicles, according to any of the preceding claims, **characterized in that** the sealing cover (4) is defined by a metal element integral to the radiator body assembly (10).

5. A heat exchanger for vehicles, according to claim 1, **characterized in that** the metal cover (4) is fastened to the mouth of the frame (1) by means of a perimetric fold (8) that clamps a perimetric projection (13) that limits the mouth of the frame (1) with the insertion of a seal (8').

6. A heat exchanger for vehicles, according to claim 1, **characterized in that** the outside frame (1) includes the fastening supports (3, 3'), all of which are molded in a single piece.

7. A heat exchanger for vehicles, according to claim 1, **characterized in that** the radiator body (10) includes cooling fins (6) established between the sheet-like elements (7, 7') of this type of radiator (10), increasing the air-wall exchange surface in such a way that the ratio between this surface and the liquid-wall exchange surface is in a proportion higher than 2:1.

8. A heat exchanger for vehicles, according to claim 7, **characterized in that** it is installed and used to heat intake air of an engine provided with a particle filter.

9. A heat exchanger for vehicles, according to claim 1, **characterized in that** the sheet (4) functions as a support of the radiator assembly within the frame (1), at the same time that it functions as a cover of the container or frame (1).

## Patentansprüche

1. Wärmeaustauscher für Fahrzeuge, der sowohl einen Einlass und einen Auslass für die zu erwärmende Luft als auch einen Einlass und einen Auslass für das flüssige Fluid, das seine Wärme auf die Luft überträgt, um die Temperatur davon zu erhöhen, enthält, **dadurch gekennzeichnet, dass** er Folgendes umfasst:
- einen Rahmen aus Formstoff, der eine geräumige Innenkammer (11) enthält, die mit der Außenseite durch wenigstens eine Breitseitenöffnung und die zwei Endleitungen, die den Lufteinlass (2) und den Luftauslass (2') umfassen, kommuniziert, wobei diese Kammer des Weiteren einige Ansatzstücke enthält, die einen Verankerungsträger (3, 3') umfassen,
- einen unabhängigen Metallheizkörper (10), der durch die Breitseitenöffnung des Rahmens (1) in das Innere der Innenkammer (11) aufgenommen ist, wobei der Heizkörper (10) den Einlasskanal (12) für das flüssige Fluid und den Auslasskanal (12') für das flüssige Fluid enthält,
- wenigstens eine abdichtende Abdeckung (4), die hermetisch befestigt ist und die als ein Träger der Anordnung wirkt, wobei eine elastische Dichtung (8') auf der Umfangskante der Öffnung des Rahmens (1) eingesetzt wird.

2. Wärmeaustauscher für Fahrzeuge nach Anspruch 1, **dadurch gekennzeichnet, dass** der Heizkörper (10) tafelartige Kühllamellen (6), die zwischen plattenartigen Elementen (7, 7') dieses Typs von Heizkörper (10) eingerichtet sind, und plattenartigen Elemente, die die Führungen für Fluid zwischen dem Fluid-Einlass (12) und dem Fluid-Auslass (12') bilden, enthält.

3. Wärmeaustauscher für Fahrzeuge nach Anspruch 2, **dadurch gekennzeichnet, dass** die Kühllamellen (6) in der Richtung Luftführungen bilden, dass die Luft von dem Einlass (2) zu dem Auslass (2'), die einen Teil des Rahmens (1) bilden, zirkuliert.

4. Wärmeaustauscher für Fahrzeuge nach einem der vorhergehenden Ansprüche, **dadurch gekennzeichnet, dass** die abdichtende Abdeckung (4) durch ein Metallelement definiert ist, das integral mit dem Heizkörperaufbau (10) ist.

5. Wärmeaustauscher für Fahrzeuge nach Anspruch 1, **dadurch gekennzeichnet, dass** die Metallabdeckung (4) an der Öffnung des Rahmens (1) mittels einer Umfangsfalte (8), die einen Umfangsüberstand (13), der die Öffnung des Rahmens (1) begrenzt, mit eingesetzter Dichtung (8') einklemmt.

6. Wärmeaustauscher für Fahrzeuge nach Anspruch 1, **dadurch gekennzeichnet, dass** die Außenseite des Rahmens (1) die Befestigungsträger (3, 3') enthält, die alle in einem Einstück geformt sind.

7. Wärmeaustauscher für Fahrzeuge nach Anspruch 1, **dadurch gekennzeichnet, dass** der Heizköper (10) Kühllamellen (6) enthält, die zwischen den plattenartigen Elementen (7, 7') dieses Typs von Heizkörper (10) eingerichtet sind und die Luft-Wand-Austauschfläche derartig vergrößern, dass das Verhältnis zwischen dieser Fläche und der Flüssigkeits-Wand-Austauschfläche in einem Verhältnis von größer als 2:1 ist.

8. Wärmeaustauscher für Fahrzeuge nach Anspruch 7, **dadurch gekennzeichnet, dass** er installiert und verwendet wird, um Ansaugluft eines Motors, der mit einem Partikelfilter versehen ist, zu erwärmen.

9. Wärmeaustauscher für Fahrzeuge nach Anspruch 1, **dadurch gekennzeichnet, dass** die Platte (4) als ein Träger des Heizkörperaufbaus innerhalb des Rahmens (1) wirkt und gleichzeitig als eine Abdeckung des Behälters oder des Rahmens (1) wirkt.

## Revendications

1. Échangeur de chaleur pour véhicules, comprenant une entrée et une sortie pour l'air à chauffer, ainsi qu'une entrée et une sortie pour le fluide liquide qui transmet sa chaleur à l'air afin d'augmenter la température de celui-ci, **caractérisé en ce qu'**il comprend
- une structure en un matériau moulé qui comprend une large chambre intérieure (11) qui communique avec l'extérieur au moyen d'au moins une large bouche latérale et les deux conduits d'extrémité comprenant l'entrée (2) et la sortie (2') d'air, ladite chambre comprenant également certaines extensions comprenant un support d'ancrage (3, 3') ;
- un corps de radiateur métallique indépendant (10) qui est logé à l'intérieur de la chambre intérieure (11) par la large bouche latérale de la structure (1), ledit corps de radiateur (10) comprenant la conduite d'entrée de fluide liquide (12) et la conduite de sortie de fluide liquide (12') ;
- au moins un couvercle d'étanchéité (4) qui est fermé de manière hermétique, qui fonctionne comme support de l'ensemble par l'insertion d'un joint d'étanchéité élastique (8') sur le bord périmétrique de la bouche de ladite structure (1).

2. Échangeur de chaleur pour véhicules selon la revendication 1, **caractérisé en ce que** le corps de radiateur (10) comprend des ailettes de refroidissement de type panneau (6) disposées entre les éléments de type feuille (7, 7') de ce type de radiateur (10), des éléments de type feuille qui constituent les passages pour le fluide entre l'entrée de fluide (12) et la sortie de fluide (12').

3. Échangeur de chaleur pour véhicules selon la revendication 2, **caractérisé en ce que** les ailettes de refroidissement (6) définissent des passages d'air dans la direction dans laquelle l'air circule depuis l'entrée (2) vers la sortie (2') qui font partie de la structure (1).

4. Échangeur de chaleur pour véhicules selon l'une quelconque des revendications précédentes, **caractérisé en ce que** le couvercle d'étanchéité (4) est défini par un élément métallique intégré à l'ensemble de corps de radiateur (10).

5. Échangeur de chaleur pour véhicules selon la revendication 1, **caractérisé en ce que** le couvercle métallique (4) est fixé à la bouche de la structure (1) au moyen d'un pli périmétrique (8) qui pince une saillie périmétrique (13) qui limite la bouche de la structure (1) par l'insertion d'un joint d'étanchéité (8').

6. Échangeur de chaleur pour véhicules selon la revendication 1, **caractérisé en ce que** la structure extérieure (1) comprend des supports de fixation (3, 3'), tous étant moulés en une seule pièce.

7. Échangeur de chaleur pour véhicules selon la revendication 1, **caractérisé en ce que** le corps de radiateur (10) comprend des ailettes de refroidissement (6) disposées entre les éléments de type feuille (7, 7') de ce type de radiateur (10), augmentant la surface d'échange à paroi équivalente à l'air de sorte que le rapport entre ladite surface et la surface d'échange à paroi liquide soit dans une proportion supérieure à 2/1.

8. Échangeur de chaleur pour véhicules selon la revendication 7, **caractérisé en ce qu'**il est installé et utilisé afin de chauffer l'air d'admission d'un moteur muni d'un filtre à particules.

9. Échangeur de chaleur pour véhicules selon la revendication 1, **caractérisé en ce que** la feuille (4) fonctionne comme support de l'ensemble de radiateur dans la structure (1), en même temps qu'elle fonctionne comme couvercle du conteneur ou de la structure (1).
